# EUROPEAN PATENT SPECIFICATION

(11) **EP 2 616 691 B1**
(45) Date of publication and mention of the grant of the patent: **23.08.2017**
(21) Application number: 11751607.0
(22) Date of filing: 02.09.2011
(51) Int. Cl.: F15B 11/20, B60D 1/64, E02F 9/22

(54) **PRESSURISED FLUID SUPPLY SYSTEMS**
UNTER DRUCK STEHENDE FLÜSSIGKEITSZUFUHRSYSTEME
SYSTÈMES D'ALIMENTATION EN FLUIDE SOUS PRESSION

(30) Priority: 17.09.2010 GB 201015589
(43) Date of publication of application: 24.07.2013
(73) Proprietor: AGCO International GmbH, 8212 Neuhausen am Rheinfall (CH)
(72) Inventor: KNOBLOCH, Juergen, 87674 Immenhofen (DE)
(74) Representative: AGCO Intellectual Property Department
(86) International application number: PCT/EP2011/065197
(87) International publication number: WO 2012/055619

(56) References cited:
- WO-A1-2004/004439
- WO-A1-2004/072387
- DE-U1-202004 015 662

## Description

This invention relates to pressurised fluid supply systems and in particular to such systems for supplying pressurised fluid to external consumers such as implements or trailers connected to a tractor.

Such external consumers are traditional connected with the supply of pressurised fluid on the tractor via a connecting block on the tractor which consists of female couplings and male couplings attached to hydraulic piping of the implement or trailer.

External consumers may be coupled to the tractor via several connecting blocks which may be positioned at different locations on the tractor. For example, implements and trailers which are drawn behind the tractor are normally connected via a connecting block located on the rear of the tractor. If a loader is fitted to the tractor this frequently connected via a connecting block located in the middle of the tractor adjacent the cab and other consumers may be connected via a connecting block on the front of the tractor.

These connecting blocks are supplied with fluid via control valves supplied by a pump or pumps on the tractor. To save money it is usual to use one valve to control more then one connection. It would be possible, for example, for a single valve to supply fluid to a connection on the rear end of a tractor and a connection on the front of the tractor. This parallel supply of connections via one valve can lead to an inconvenient situation if the tractor driver is not aware that two connections are connected to the same control valve since the driver may operate the control intending to operate one consumer and unintentionally operate a second consumer. For example, if the connection at middle of the tractor is connected to a front loader and simultaneously an implement is connected to the connection at the rear, the driver might intend to only lower the front loader and might simultaneous lower the rear implement. Another prior art example is known from DE 202004015662 U1.

It is an object of the present invention to provide a pressurised fluid supply system which provides information (signals/messages) to avoid the above mentioned inconvenient situation for the driver.

Thus in accordance with the present invention there is provided a pressurised fluid supply system having a pump which supplies pressurised fluid to more than one consumer via a common fluid flow control valve, each consumer being supplied via a fluid outlet, each outlet having associated therewith a sensing means to detect when a consumer is connected to the outlet, and a control unit receiving signals from the sensing means and providing a signal if two or more consumers are operable by the same fluid flow control valve, wherein each fluid outlet has a supply connection and return connection and each connection is provided with a closure flap which is moveable between a closed position in which no consumer is connected with the connection and an open position in which a consumer is connected with the connection, the sensing means detecting a consumer connection by sensing when the flap is in its open position.

By detecting if more than one consumer is connected to the same fluid flow control valve the above mentioned inconvenient situation of the simultaneous operation of two consumers can be avoided.

The supply and return connections may be surrounded by a fluid leakage housing which catches fluid which leaks from the connections, the flaps being mounted on the housing.

The sensors may be also mounted on the housing.

Preferably the flaps are spring-loaded towards their closed positions. The flaps may pivot between their closed and open positions.

The sensors may be of the magnetic proximity type, or Hall Effect type, or optical/light beam type, or touch sensitive type.

The control unit may be arranged to provide a signal/message if only one of the supply or return connections of an outlet is connected.

The fluid leakage housing may be formed in two parts from plastics material with a peripheral seal sealing the parts together and the housing also carries seals which contact the flaps when in their closed positions.

At least one of the consumers may be directly connected to the system without the use of a fluid outlet, the directly connected consumer being supplied from the system via a closable supply valve, the supply valve being provided with a sensor which provides a signal to the control unit when the supply valve is open.

One embodiment of the present invention will now be described, by way of example only, with reference to the accompanying drawings in which :-
Figure 1 shows diagrammatically a tractor pressurised fluid supply circuit in accordance with the present invention;
Figure 2 shows a perspective view of an external outlet used in the system of Figure 1;
Figure 3 shows a view of the outlet of Figure 2 when viewed from the rear of a tractor;
Figure 4 shows section C-C of Figure 3;
Figure 5 shows section A-A of Figure 3;
Figure 6 shows section E-E of Figure 4;
Figure 7 shows section F-F of Figure 3 with the outlet flaps closed, and
Figure 8 shows section F-F of Figure 3 with the outlet flaps open.

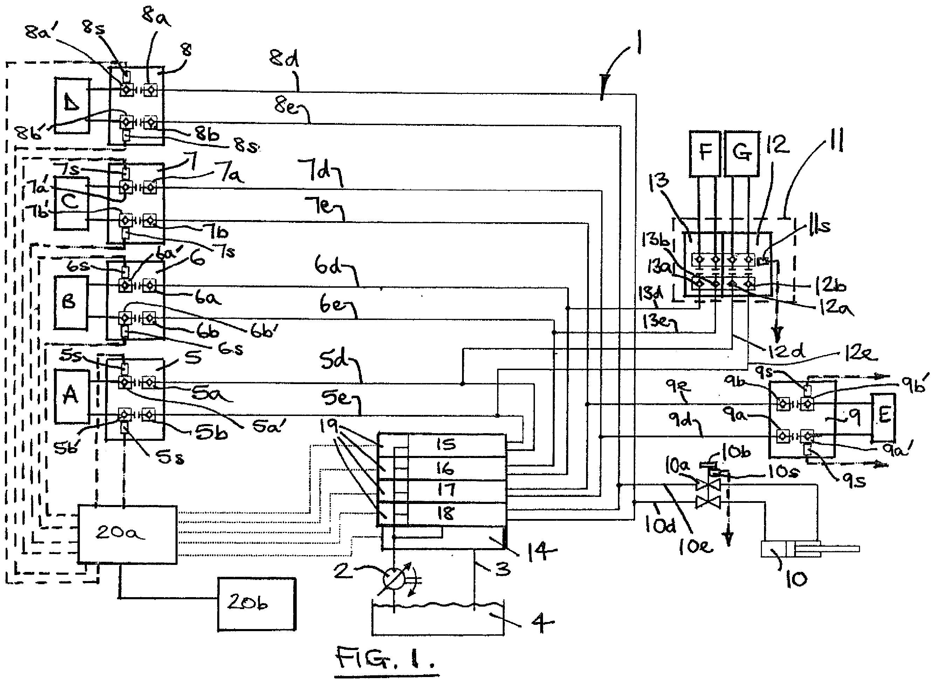

Referring to Figure 1, a hydraulic circuit 1 is supplied with hydraulic oil from a sump 4 via a variable delivery pump 2 and oil returns to the sump 4 via a return 3.

The tractor is equipped with external outlets 5, 6, 7, 8 at the rear of the tractor to supply external consumers (e.g. hydraulic rams and/or motors). Every external outlet 5, 6, 7, 8 has two hydraulic connections in form from female supply couplings 5a, 6a, 7a, 8a, which are connected to pump 2 via lines 5d, 6d, 7d and 8d and hydraulic flow control valves 15 to 18 respectively and female return couplings 5b, 6b, 7b, 8b connected via lines 5e, 6e, 7e and 8e to return 3 also via valves 15 to 18.

Male couplings 5a',5b':6a',6b':7a',7b':8a',8b engage the corresponding female couplings to connect the supply and return lines with external hydraulic consumers A, B, C, and D respectively.

Similarly on the front of the tractor an external outlet 9 is provided with female supply and return couplings 9a and 9b which are connected via lines 9d and 9e with lines 7d and 7e respectively and hence to the same control valve 17 as couplings 7a and 7b. Female couplings 9a and 9b supply a consumer E at the front of the tractor via male couplings 9a' and 9b' respectively.

Furthermore a hydraulic cylinder 10 of a lifting device on the front of the tractor is directly connected via lines 10d and 10e to lines 8d and 8e and hence to valve 18. The supply to the hydraulic cylinder 10 can be cut-off by closing a supply valve 10a by a hand wheel 10b or electrical/pneumatically/hydraulically.

A multi coupler outlet 11 is provided in the middle of the tractor for a front loader connecting two couplings 12 and 13 in one step. The coupling 12 is connected via lines 12d and 12e with lines 5d and 5e and hence with valve 15 to control a hydraulic cylinder (designated consumer G) of a front loader for lift/lowering of a loader bucket. Similarly the other coupling 13 is connected via lines 13d and 13e with lines 6d and 6e and hence with valve 16 to control a hydraulic cylinder (designated consumer F) for tilting the loader bucket.

All connections of the tractor must be provided with hydraulic oil and therefore connected via a hydraulic valve block 14 which is connected with pump 2 and return 3.

If every single outlet 5, 6, 7,8,9,10,11 were to be controlled individually a respective hydraulic valve 15 to 18 would need to be provided for every outlet. This causes high costs and it is therefore usual to supply more then one outlet via the same valve as described above.

Thus in the above described system :-
- outlet 5 at the rear and outlet 12 of the multi coupler 11 are controlled via valve 15,
- outlet 6 at the rear and outlet 13 of the multi coupler 11 are controlled via valve 16,
- outlet 7 at the rear and outlet 9 at the front of the tractor are controlled via valve 17, and
- outlet 8 at the rear and hydraulic cylinder 10 of a lifting device at the front are controlled via valve 18.

The valves 15, 16, 17, 18 are integrated in the hydraulic valve block 14 and provided with hydraulic oil by a pilot control part 19. The oil supply to the valves 15, 16, 17, 18 can be disconnected via an electrical control of the pilot control part 19. Thereby all valves 15, 16, 17, 18 are switched off conjointly by one control signal.

The valves 15, 16, 17, 18 also can be controlled individually by respective control means such as a joy stick regarding functions such as volume flow rate and direction of flow etc.

In accordance with the present invention, to prevent two outlets (for example 5 and 12) being supplied simultaneous, every female outlet is monitored to sense if a male coupling is connected. Thus sensors 5s, 6s, 7s, 8s, 9s and 11s are provided adjacent the female outlets to detect the connection of a load and a sensor 10s is provided adjacent valve 10a to provide a signal when valve 10a is open.

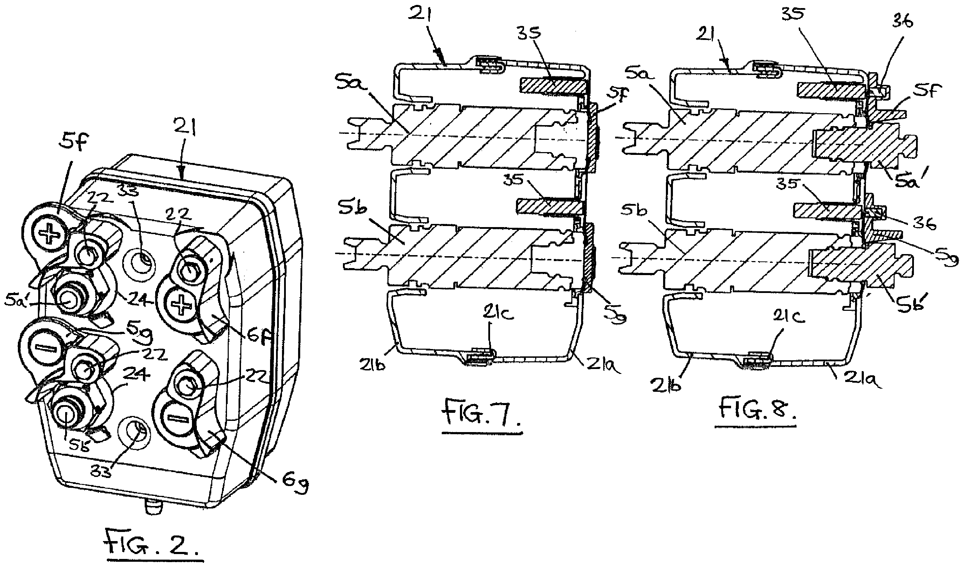

Figures 2 to 8 show a practical embodiment of the present invention in which the outlets 5 and 6 are mounted in an oil proof case 21. The task of the oil proof case 21 is to collect oil which leaks from the couplings during de-coupling. This prevents oil pollution of the environment. In addition, the leaking oil can be captured and then returned into the hydraulic circuit of a tractor

In a typical arrangement, the connections 5 and 6 are mounted on the leak proof case 21 located in the middle of the rear of the tractor and the connections 7 and 8 are mounted on a similar case 21 alongside connections 5 and 6.

Referring to outlets 5 and 6, female couplings 5a, 5b and 6a, 6b are mounted in case 21 and male couplings 5a', 5b' and 6a', 6b' are inserted into the corresponding female couplings by pivoting aside closing flaps 5f, 5g and 6f, 6g respectively. Flaps 5f, 5g and 6f, 6g are pivotally mounted on case 21 by pivot pins 22 and are biased to their closed positions (in which they close of openings 24 in the case 21) by coil springs 23 which encircle pivots pins 22.

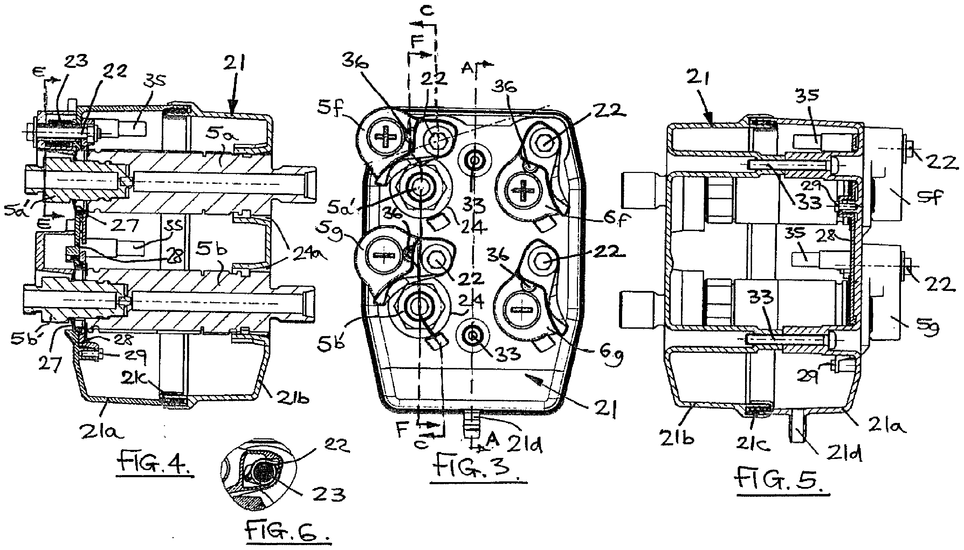

The right-hand side of Figures 2 and 3 shows flaps 6f and 6g in their closed positions whereas the left-hand side of Figures 2 and 3 shows flaps 5f and 5g in their open positions in which openings 24 are revealed. When the flaps are in their open position the corresponding male couplings 5a', 5b' and 6a', 6b' can be inserted into the female couplings.

The case 21 has a front part 21a and a rear part 21b which are joined by an oil proof seal 21c. Rear part 21b includes an oil drain outlet 21d to which a pipe (not shown) can be connected through which the oil caught by the case 21 can be capture in a bottle or other reservoir for return to the hydraulic system.

The flaps 5f and 6f covering the supply couplings 5a and 6a are marked with a plus sign and the flaps 5g and 6g covering the return couplings 5b and 6b are marked with a minus sign as is the normal convention. The flaps can also be marked with the appropriate colour (e.g. red for supply and say blue or green for return).

Openings 24 are sealed by seals 27 carried on a plate 28 which is secured at 29 to the interior of case 21. Seals 27 contact the male couplings 5a', 5b', 6a', 6b' and also seal with flaps 5f, 5g, 6f, 6g when the flaps are in their closed position. Openings 24a through which female couplings 5a, 5b, 6a, 6b extend into the case are also sealed to the case by seals (not shown).

A sensing arrangement is provided to indicate when a male coupling is engaged with its corresponding female coupling. Thus a first sensor part 36 is moulded into or carried by each flap 5f, 5g and 6f, 6g and, when the flap is open and a male coupling is connected to the associated female coupling, this first sensor part 36 is adjacent to a second sensor part 35 carried by the case 21. This causes the second sensor part 35 to send a signal to an associated control unit 20a which has a display terminal 20b to indicate that a particular coupling is in use.

One convenient sensor arrangement is for the first sensor part 36 to comprise a permanent magnet and for the second sensor part 35 to sense the presence of the magnet when the associated flap is open and to send a signal to the control system.

In the present embodiment magnet sensors are used which enable a non-contact sensing. Alternatively an inductive sensor or Hall Effect sensor can be also used.

Furthermore optical sensors as well as a light barriers or a touch sensitive sensor can be used. But these are easily soiled.

Although in the arrangement described above the sensor part are mounted in the case 21 this is not essential. For example, the fixing of the sensors can be fitted on a component, which fixes the female couplings and the cover flaps on the tractor.

In the arrangement described above the connection of a consumer is detected via the rotation of the cover flaps. It could be also possible to detect the male coupling via a sensor directly.
The female coupling could be also equipped directly with a sensor.

The above arrangement enables the connection of two consumers to the same control valve to be detected. For example, if the outlet 7 on the rear of the tractor end and the outlet 9 on the front are connected to the same valve 17, both loads would be controlled together. The sensors 7s and 9s would detect this situation and would deliver a signal to the control unit 20a. The signal or message could appear via display terminal 20b in an acoustic form or an optical form. Alternatively the valve 17 could be locked individually or via the pilot control part 19, so that no oil can be delivered to the consumers.

Further information for the driver is provided in that if only the male or female coupling (e.g. 5a or 5b) of each outlet is connected the system can generate a signal/message.

Also, if coupling 5a is connected and coupling 6b is connected in error (instead of coupling 5b) both associated circuits are not completed and the system can also generate a signal/message.

By using a configuration in which the sensing means delivers a signal if the closure flaps are opened (when a consumer is connected) and arranging that the flaps automatically return to their closed positions when no consumer is connected a simple sensing arrangement can be used. Also the normal actual male and female coupling parts can be used without modifications.

## Claims

1. A pressurised fluid supply system having more than one consumer (A, B, C, D, E, F, G, 10) and a pump (2) which supplies pressurised fluid to the consumers (A, B, C, D, E, F, G, 10) via a common fluid flow control valve (15, 16, 17, 18), each consumer being supplied via a fluid outlet (5, 6, 7, 8, 9, 11), **characterised in that** each outlet has associated therewith a sensing means (5s, 6s, 7s, 8s, 9s, 11 s) to detect when a consumer is connected to the outlet, and a control unit (20a) receiving signals from the sensing means and providing a signal if two or more consumers are operable by the same fluid flow control valve, wherein each fluid outlet has a supply connection and return connection and each connection is provided with a closure flap (5f, 5g, 6f, 6g) which is moveable between a closed position in which no consumer is connected with the connection and an open position in which a consumer is connected with the connection, the sensing means (5s, 6s) detecting a consumer connection by sensing when the flap is in its open position.

2. A system according to claim 1 in which the supply and return connections are surrounded by a fluid leakage housing (21) which catches fluid which leaks from the connections, the flaps (5f, 5g, 6f, 6g) being mounted on the housing.

3. A system according to claim 2 in which the sensing means (5s, 6s) are also mounted on the housing (21).

4. A system according to claim 2 or 3 in which the flaps (5f, 5g, 6f, 6g) are spring-loaded towards their closed positions.

5. A system according to any one of claims 1 to 4 in which the flaps (5f, 5g, 6f, 6g) pivot between their closed and open positions.

6. A system according to any one of claims 1 to 5 in which the sensing means (5s, 6s) are of the magnetic proximity type, or hall effect type, or optical/light beam type, or touch sensitive type.

7. A system according to claim 1 in which the control unit (20a) is arranged to provide a signal if only one of the supply or return connections of an outlet is connected.

8. A system according to claim 2 in which the fluid leakage housing (21) is formed in two parts (21a, 21b) from plastics material with a peripheral seal (21c) sealing the parts together and the housing also carries seals which contact the flaps when in their closed positions.

9. A pressurised fluid supply system according to claim 1 in which at least one consumer (10) is directly connected to the system without the use of a fluid outlet, the directly connected consumer being supplied from the system via a closable supply valve (10a), the supply valve being provided with a sensor (10s) which provides a signal to the control unit (20a) when the supply valve is open.

## Patentansprüche

1. Versorgungssystem für ein unter Druck stehendes Fluid mit mehr als einem Verbraucher (A, B, C, D, E, F, G, 10) und einer Pumpe (2), die den Verbrauchern (A, B, C, D, E, F, G, 10) unter Druck stehendes Fluid über ein gemeinsames Fluidfluss-Steuer/Regelventil (15, 16, 17, 18) zuführt, wobei jeder Verbraucher über einen Fluidauslass (5, 6, 7, 8, 9, 11) versorgt wird, **dadurch gekennzeichnet, dass** jeder Auslass ein ihm zugeordnetes Erfassungsmittel (5s, 6s, 7s, 8s, 9s, 11s) aufweist, um festzustellen, wenn ein Verbraucher mit dem Auslass verbunden ist, und einer Steuer/Regel-Einheit (20a), die Signale von dem Erfassungsmittel empfängt und ein Signal bereitstellt, falls zwei oder mehr Verbraucher durch dasselbe Fluidfluss-Steuer/Regel-Ventil betreibbar sind, wobei jeder Fluidauslass eine Versorgungsverbindung und eine Rückkehrverbindung aufweist und jede Verbindung mit einer Schließklappe (5f, 5g, 6f, 6g) versehen ist, die zwischen einer geschlossenen Stellung, in der kein Verbraucher mit der Verbindung verbunden ist, und einer offenen Stellung bewegbar ist, in der ein Verbraucher mit der Verbindung verbunden ist, wobei das Erfassungsmittel (5s, 6s) eine Verbraucherverbindung dadurch feststellt, dass es erfasst, wenn sich die Klappe in ihrer offenen Stellung befindet.

2. System nach Anspruch 1, bei dem die Versorgungsverbindungen und die Rückkehrverbindungen von einem Fluidleckgehäuse (21) umgeben sind, das aus den Verbindungen austretendes Fluid auffängt, wobei die Klappen (5f, 5g, 6f, 6g) an dem Gehäuse montiert sind.

3. System nach Anspruch 2, bei dem die Erfassungsmittel (5s, 6s) ebenfalls an dem Gehäuse (21) montiert sind.

4. System nach Anspruch 2 oder 3, bei dem die Klappen (5f, 5g, 6f, 6g) in Richtung ihrer geschlossenen Stellung federbelastet sind.

5. System nach einem der Ansprüche 1 bis 4, bei dem die Klappen (5f, 5g, 6f, 6g) zwischen ihrer offenen und geschlossenen Stellung verschwenken.

6. System nach einem der Ansprüche 1 bis 5, bei dem die Erfassungsmittel (5s, 6s) solche des Typs der magnetischen Näherung, des Typs des Hall-Effekts, des Typs eines optischen Strahls oder Lichtstrahls oder eines berührungsempfindlichen Typs sind.

7. System nach Anspruch 1, bei dem die Steuer/Regel-Einheit (20a) angeordnet ist, um nur dann ein Signal bereitzustellen, wenn nur die Versorgungsverbindung oder die Rückkehrverbindung eines Auslasses verbunden ist.

8. System nach Anspruch 2, bei dem das Fluidleckgehäuse (21) aus zwei Teilen (21a, 21b) aus Kunststoffmaterial mit einer umlaufenden Dichtung (21c) gebildet ist, welche die Teile gegeneinander abdichtet, und das Gehäuse ebenfalls Dichtungen aufweist, welche die Klappen in ihrer geschlossenen Stellung kontaktieren.

9. Versorgungssystem für ein unter Druck stehendes Fluid nach Anspruch 1, bei dem mindestens ein Verbraucher (10) direkt und ohne Verwendung eines Fluidauslasses mit dem System verbunden ist, wobei der direkt verbundene Verbraucher über ein schließbares Versorgungsventil (10a) von dem System versorgt wird, wobei das Versorgungsventil mit einem Sensor (10s) ausgestattet ist, welcher der Steuer/Regel-Einheit (20a) ein Signal bereitstellt, wenn das Versorgungsventil offen ist.

## Revendications

1. Dispositif d'alimentation en fluide sous pression comportant plus d'un consommateur (A, B, C, D, E, F, G, H, 10) et une pompe (2) qui délivre un fluide sous pression aux consommateurs (A, B, C, D, E, F, G, 10) par l'intermédiaire d'une vanne de commande de débit de fluide commune (15, 16, 17, 18), chaque consommateur étant alimenté par l'intermédiaire d'une sortie de fluide (5, 6, 7, 8, 9, 11), **caractérisé en ce que** chaque sortie est associée à un moyen de détection (5s, 6s, 7s, 8s, 9s, 11s) afin de détecter si un consommateur est raccordé à la sortie, et une unité de commande (20a) recevant des signaux à partir du moyen de détection et délivrant un signal si deux ou plusieurs consommateurs peuvent être commandés par la même vanne de commande de débit de fluide, dans lequel chaque sortie de fluide comporte un raccord d'alimentation et un raccord de retour et chaque raccord comporte un clapet de fermeture (5f, 5g, 6f, 6g) qui peut être déplacé entre une position fermée, dans laquelle aucun consommateur n'est couplé au raccord, et une position ouverte, dans laquelle un consommateur est couplé au raccord, les moyens de détection (5s, 6s) détectant un raccordement de consommateur en détectant le fait que le clapet est dans sa position ouverte.

2. Dispositif selon la revendication 1, dans lequel les raccords d'alimentation et de retour sont entourés par un boîtier de fuite de fluide (21) qui collecte les fuites de fluide par les raccords, les clapets (5f, 5g, 6f, 6g) étant montés sur le boîtier.

3. Dispositif selon la revendication 2, dans lequel les moyens de détection (5s, 6s) sont aussi montés sur le boîtier (21).

4. Dispositif selon la revendication 2 ou 3, dans lequel les clapets (5f, 5g, 6f, 6g) sont préchargés par ressort vers leur position fermée.

5. Dispositif selon l'une quelconque des revendications 1 à 4, dans lequel les clapets (5f, 5g, 6f, 6g) pivotent entre leurs positions fermée et ouverte.

6. Dispositif selon l'une quelconque des revendications 1 à 5, dans lequel les moyens de détection (5s, 6s) sont du type magnétique par proximité ou du type à effet de hall ou du type par faisceau optique/lumineux ou du type sensible au toucher.

7. Dispositif selon la revendication 1, dans lequel l'unité de commande (20a) est agencée de manière à délivrer un signal si un seul des raccords d'alimentation ou de retour d'une sortie est raccordé.

8. Dispositif selon la revendication 2, dans lequel le boîtier de fuite de fluide (21) est formé en deux parties (21a, 21b) en une matière plastique, un joint périphérique (21c) assurant l'étanchéité des parties entre elles et le boîtier supporte aussi des joints qui viennent en contact avec les clapets lorsqu'ils sont dans leur position fermée.

9. Dispositif d'alimentation en fluide sous pression selon la revendication 1, dans lequel au moins un consommateur (10) est raccordé directement au dispositif sans utiliser une sortie de fluide, le consommateur raccordé directement étant alimenté à partir du dispositif par l'intermédiaire d'une vanne d'alimentation pouvant être fermée (10a), la vanne d'alimentation comportant un capteur (10s) qui délivre un signal à l'unité de commande (20a) lorsque la vanne d'alimentation est ouverte.
